# FASCICULE DE BREVET EUROPEEN

(11) **EP 3 895 295 B1**
(45) Date de publication et mention de la délivrance du brevet: **25.01.2023**
(21) Numéro de dépôt: 19817313.0
(22) Date de dépôt: 12.12.2019
(51) Int. Cl.: H02K 17/16

(54) **BARRE CONDUCTRICE, ROTOR ET MACHINE ÉLECTRIQUE TOURNANTE ASSOCIÉS**
STROMSCHIENE UND ZUGEHÖRIGER ROTOR UND ROTIERENDE ELEKTRISCHE MASCHINE
CONDUCTOR BAR AND ASSOCIATED ROTOR AND ROTATING ELECTRICAL MACHINE

(30) Priorité: 14.12.2018 FR 1872968
(43) Date de publication de la demande: 20.10.2021
(73) Titulaire: GE Energy Power Conversion Technology Ltd, RUGBY Warwickshire CV21 1BD (GB)
(72) Inventeur: GALMICHE, Christophe, 54200 TOUL (FR)
(74) Mandataire: Serjeants LLP
(86) Numéro de dépôt international: PCT/EP2019/084846
(87) Numéro de publication internationale: WO 2020/120660

(56) Documents cités:
- EP-A1- 0 608 675
- EP-A1- 2 306 624
- EP-A1- 3 051 674
- EP-A1- 3 051 675
- WO-A2-2011/147846
- CH-A5- 683 957

## Description

La présente invention concerne les machines électriques tournantes asynchrones à cage d'écureuil et se rapporte plus particulièrement à l'extrémité des barres conductrices incorporées dans un rotor de la machine.

La présente invention concerne également une machine électrique tournante comprenant un tel rotor.

On se réfère au document EP 0 608 675 qui décrit un tel rotor.

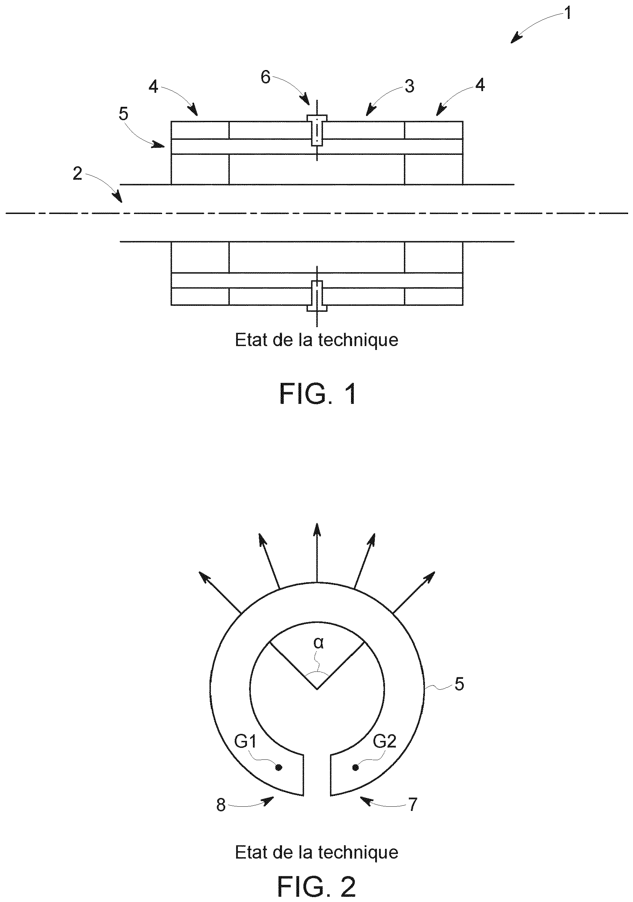

La Figure 1 illustre un rotor 1 comportant un arbre 2 supporté de part et d'autre sur des paliers (non représentés) et une masse magnétique 3 constituée de tôles rotoriques supportées par ledit arbre, les tôles rotoriques étant maintenues par serrage sur celui-ci.

Les tôles rotoriques sont serrées l'une contre l'autre par deux anneaux de court-circuit 4 disposés à chaque extrémité de la masse magnétique 3 et frettés sur l'arbre 2.

Les anneaux de court-circuit 4 sont réunis entre eux par des barres 5 afin de former la cage d'écureuil du rotor.

Les barres sont fixées en un seul point à la masse magnétique 3 à l'aide d'une vis 6, le point de fixation étant situé au centre de la longueur de la masse magnétique.

Les extrémités des barres 5 sont librement disposées dans des alésages pratiqués à la périphérie des anneaux de court-circuit 4 de sorte qu'il subsiste un jeu de tolérance qui permet la libre dilatation thermique de la barre dans l'alésage de l'anneau 4.

Néanmoins, ce jeu doit être suffisamment faible de manière à assurer un contact suffisant permettant le passage du courant électrique entre les barres 5 et les anneaux 4.

Les barres 5 sont creusées et fendues sur une distance qui correspond essentiellement à l'épaisseur axiale de l'anneau 4 de court-circuit.

La Figure 2 illustre une extrémité de barre 5 circulaire, creuse et fendue de manière à définir deux lèvres 7 et 8, chaque lèvre 7 et 8 comprenant un centre de gravité G1 et G2 situé proche de la fente.

Sous l'action de la force centrifuge, les lèvres 7 et 8 de la barre 5 s'écartent et exercent de cette manière une pression de plus en plus importante avec la vitesse de rotation sur la face interne de l'alésage assurant un contact électrique tout en permettant un glissement sous l'action de la dilatation thermique, notamment dans une direction axiale.

Les flèches représentées sur la Figure 2 matérialisent la surface de contact entre la barre 5 et l'alésage sous l'effet de la force centrifuge.

La surface de contact s'étend sur un angle α.

Cependant, seule une partie de la périphérie extérieure de la barre 5 est en contact avec l'alésage, l'angle α étant inférieur à 180° soit moins de la moitié de la surface périphérique externe de la barre est en contact avec l'anneau 4.

Lorsque le rotor 1 est animé d'un mouvement de rotation, comme les centres de gravité G1 et G2 des lèvres 7 et 8 sont proches de la fente, les lèvres 7 et 8 se déforment vers l'intérieur de la partie creusée de l'extrémité de la barre 5, éloignant l'extrémité périphérique des lèvres 7 et 8 de la surface interne de l'alésage des anneaux de court-circuit 4. Par conséquent, l'extrémité périphérique des lèvres 7 et 8 n'est pas en contact avec la face interne de l'alésage, réduisant la surface de contact selon l'angle α.

Comme le couple et la puissance développés par une machine électrique tournante asynchrone dépendent notamment de l'intensité des courants induits traversant les barres, il est nécessaire d'améliorer la surface de contact entre les barres et les anneaux de court-circuit pour augmenter le couple et la puissance développés par la machine électrique tournante à cage d'écureuil sans modifier les caractéristiques physiques de la machine, notamment le nombre de barres insérées dans le rotor.

Il est donc proposé de pallier les inconvénients des rotors pour machine électrique tournante asynchrone à cage d'écureuil selon l'état de la technique, de préférence dont la vitesse de rotation est supérieure à 3000 tr/min, par exemple 10000 tr/min.

Au vu de ce qui précède, l'invention propose, selon un aspect, une barre conductrice pour rotor à cage d'écureuil selon la revendication 1, comprenant au moins une extrémité partiellement fendue de sorte qu'une section de l'extrémité forme deux branches symétriques par rapport à la fente.

Le centre de gravité de chaque branche est disposé de sorte que les branches s'écartent vers l'extérieur de la barre sous l'effet de la force centrifuge lorsque le rotor est animé d'un mouvement de rotation.

Selon une caractéristique, l'extrémité de section ronde est creuse et comprend un méplat disposé aux extrémités libres des branches.

Avantageusement, la section comporte des extrémités droites ou courbées reliées par des côtés droits ou courbés.

De préférence, la section comprend en outre un méplat disposé à une extrémité libre de chaque branche.

Selon une autre caractéristique, l'extrémité est fendue sur toute la section.

Selon un autre aspect, il est proposé un rotor à cage d'écureuil pour machine électrique tournante asynchrone à cage d'écureuil, comprenant deux éléments de compaction enserrant une masse magnétique cylindrique, des éléments conducteurs intercalés entre la masse magnétique et les éléments de compaction, et des barres conductrices telles que définies précédemment disposées dans des logements de la masse magnétique et réparties uniformément sur au moins un diamètre de la masse magnétique de sorte que les éléments conducteurs et les barres conductrices forment une cage d'écureuil, l'extrémité des barre étant partiellement fendue sur au moins une distance en regard de l'élément conducteur, et chaque barre conductrice étant orientée dans un logement de sorte que la fente soit orientée vers un axe de rotation du rotor.

Selon une caractéristique, lorsque l'extrémité de la barre est partiellement fendue, la partie de l'extrémité reliant les deux branches est en regard de la périphérie extérieure du rotor.

De préférence, l'extrémité comprend un trou oblong orienté selon une direction axiale et l'élément conducteur comprend un trou taraudé débouchant, une goupille filetée étant insérée dans le trou taraudé débouchant de sorte que la goupille s'insère dans le trou oblong pour empêcher la rotation de la barre conductrice sur elle-même.

Avantageusement, l'extrémité comprend un trou oblong orienté et débouchant selon une direction axiale, et l'élément conducteur comprend un trou taraudé débouchant, une goupille filetée étant insérée dans le trou taraudé débouchant de sorte que la goupille s'insère dans le trou oblong pour empêcher la rotation de la barre conductrice sur elle-même.

De préférence, lorsque l'extrémité de la barre est fendue sur toute la section, l'extrémité comprend deux sous-parties séparées par un plan perpendiculaire à la fente, la sous-partie comprenant la dimension perpendiculairement à la fente la plus grande étant en regard de la périphérie extérieure du rotor.

Selon une autre caractéristique, l'élément conducteur ou l'élément de compaction comprend un trou taraudé débouchant, une goupille filetée étant insérée dans le trou taraudé débouchant de sorte que la goupille s'insère dans la fente pour empêcher la rotation de la barre conductrice sur elle-même.

Avantageusement, lorsque l'extrémité de la barre comprend un méplat, la barre est en outre orientée de sorte que le méplat soit situé en regard d'un axe de rotation du rotor.

De préférence, l'extrémité de la barre conductrice comprenant un méplat forme un logement, une lame flexible étant insérée dans ledit logement de manière à exercer une précontrainte radiale pour mettre en contact la périphérie externe de l'extrémité de la barre et l'élément conducteur.

Avantageusement, l'extrémité de la barre conductrice comprenant un méplat forme un logement, une lame flexible étant insérée dans ledit logement. Cette lame comprend trois pans, un premier et un deuxième pans étant insérés dans le logement de manière à exercer une précontrainte radiale pour mettre en contact la périphérie externe de l'extrémité de la barre et l'élément conducteur, une extrémité du premier pan étant en appui sur une face d'appui de l'extrémité située à l'extrémité du méplat opposée à un bouchon vissé dans un taraudage situé à l'opposé de la masse magnétique de l'élément conducteur ou de l'élément de compaction. Le troisième pan de la lame flexible est logé dans un espace entre l'extrémité de la barre et le bouchon, une extrémité du troisième pan étant logée dans une gorge du trou débouchant située à l'opposée de la masse magnétique et étant pincée par le bouchon vissé, le pan incliné flexible étant déformé dans une direction axiale par l'opération de vissage du bouchon de manière à exercer une précontrainte axiale sur la face d'appui de la barre conductrice pour limiter le déplacement de la barre conductrice selon la direction axiale et de manière à empêcher la rotation de la barre sur elle-même.

Selon une autre caractéristique, la lame flexible comprend une lame flexible métallique ou une lame flexible isolante.

Avantageusement, l'élément conducteur comprend un disque de court-circuit ou une couronne de court-circuit.

De préférence, l'élément de compaction comprend un plateau de serrage ou une bride de compaction d'un demi-arbre non traversant.

Selon encore une autre caractéristique, la masse magnétique comprend des tôles magnétiques compactées.

Avantageusement, la masse magnétique comprend un empilement de plaques métalliques.

De préférence, la masse magnétique comprend un corps monobloc.

Selon un autre aspect, il est proposé une machine électrique tournante asynchrone comprenant un rotor tel que défini précédemment.

D'autres caractéristiques et avantages de l'invention apparaîtront à la lecture de la description qui suit de modes de réalisation de l'invention, donnés uniquement à titre d'exemples non limitatifs et en référence aux dessins sur lesquels :
[Fig 1], dont il a déjà été fait mention, illustre un rotor d'une machine électrique tournante asynchrone à cage d'écureuil selon l'état de la technique ;
[Fig 2] dont il a déjà été fait mention, illustre la section de l'extrémité d'une barre conductrice selon l'état de la technique ;
[Fig 3] illustre un mode de réalisation d'une machine électrique tournante asynchrone à cage d'écureuil ;
[Fig 4]

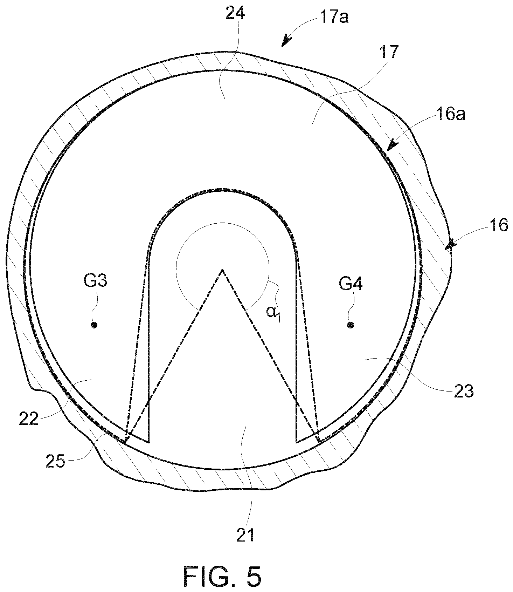

[Fig 5] illustrent des coupes partielles d'un premier mode de réalisation du rotor ;
[Fig 6]
[Fig 7]
[Fig 8]
[Fig 9]
[Fig 10]
[Fig 11]
[Fig 12]
[Fig 13]
[Fig 14]
[Fig 15]
[Fig 16]
[Fig 17]
[Fig 18]
[Fig 19]

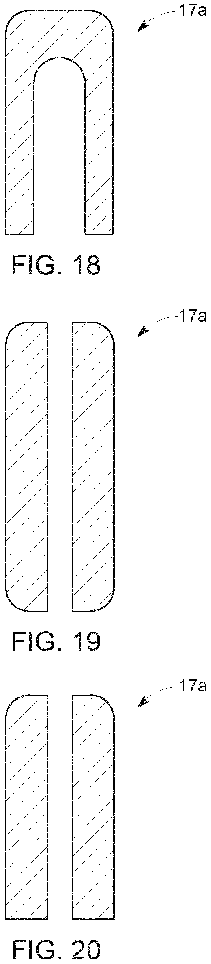

[Fig 20] illustrent des sections de mode de réalisation de l'extrémité de la barre conductrice ;
[Fig 21]
[Fig 22]

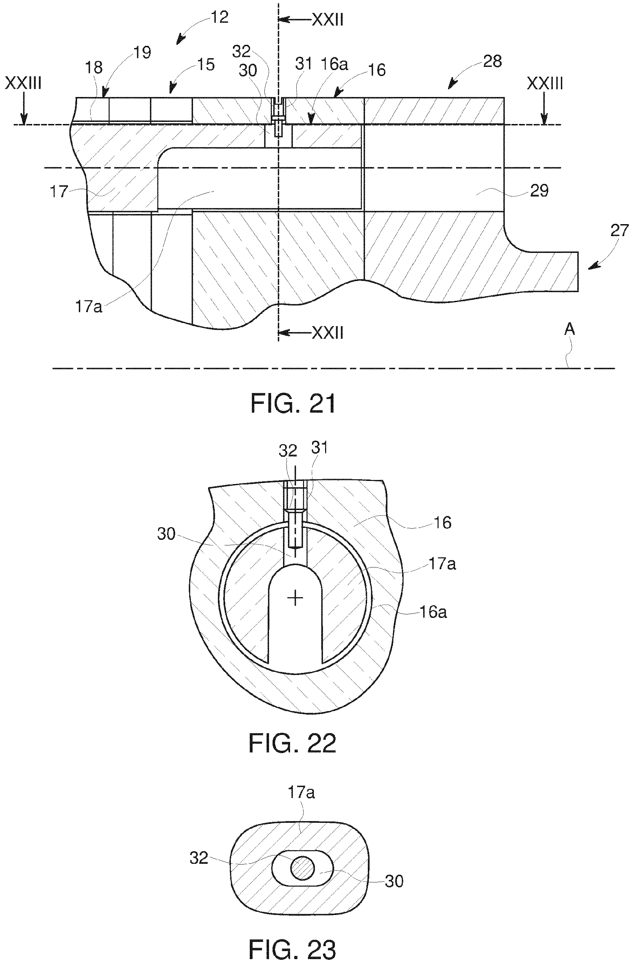

[Fig 23] illustrent des coupes partielles d'un deuxième mode de réalisation du rotor ;
[Fig 24]
[Fig 25]

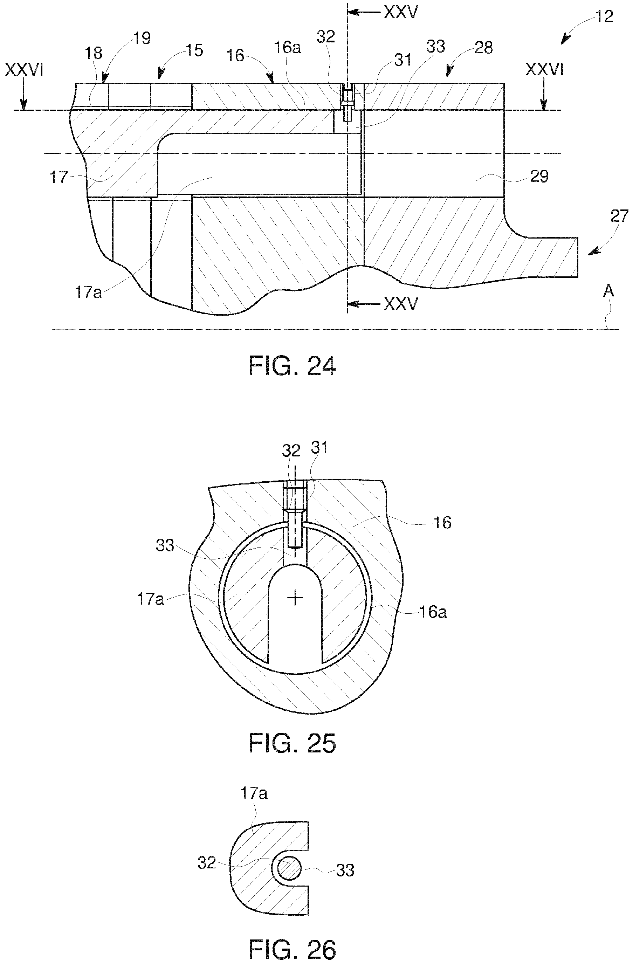

[Fig 26] illustrent des coupes partielles d'un troisième mode de réalisation du rotor ;
[Fig 27]
[Fig 28]

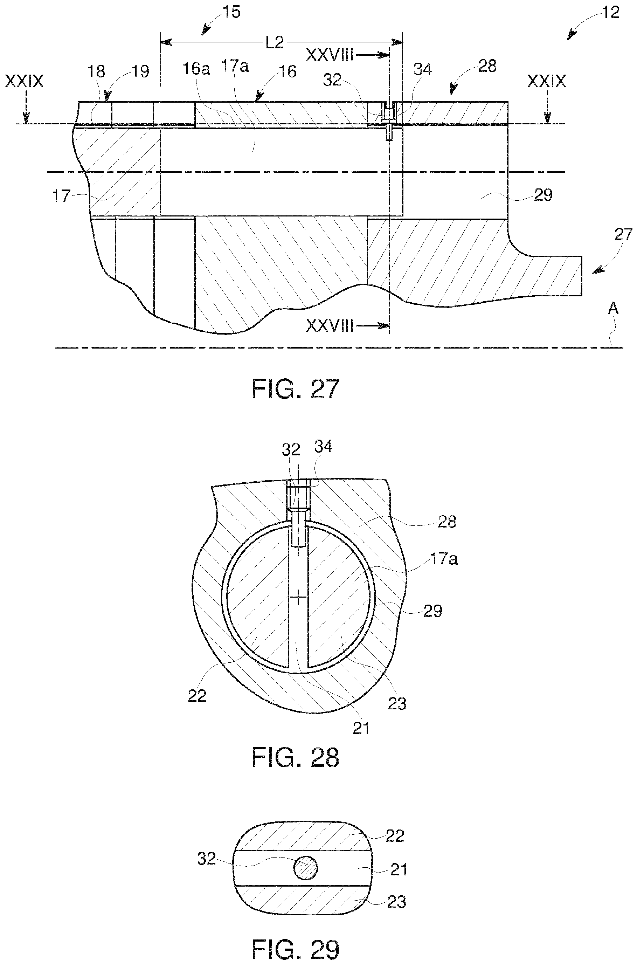

[Fig 29] illustrent des coupes partielles d'un quatrième mode de réalisation du rotor ;
[Fig 30]

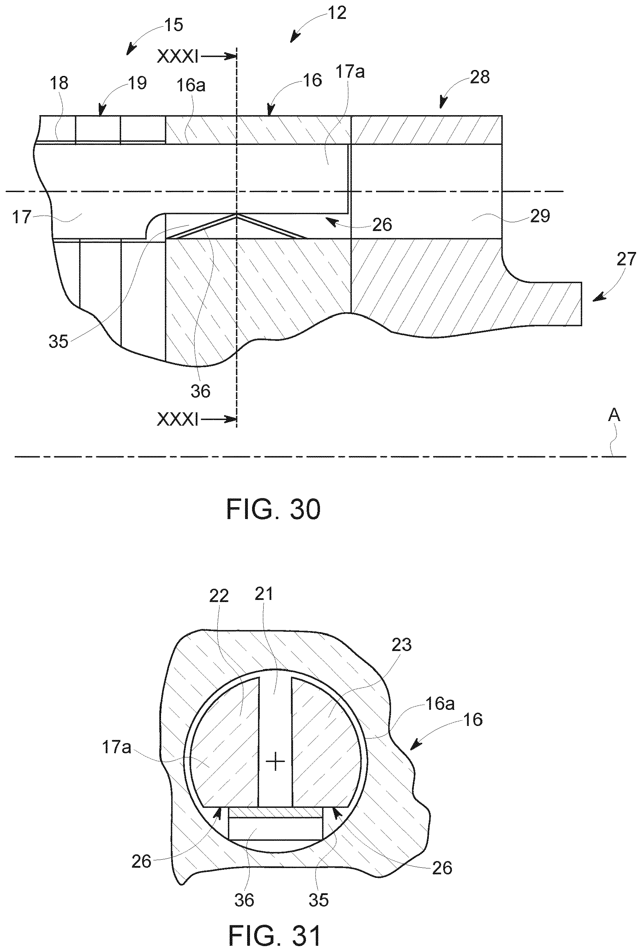

[Fig 31] illustrent des coupes partielles d'un cinquième mode de réalisation du rotor ;
[Fig 32]

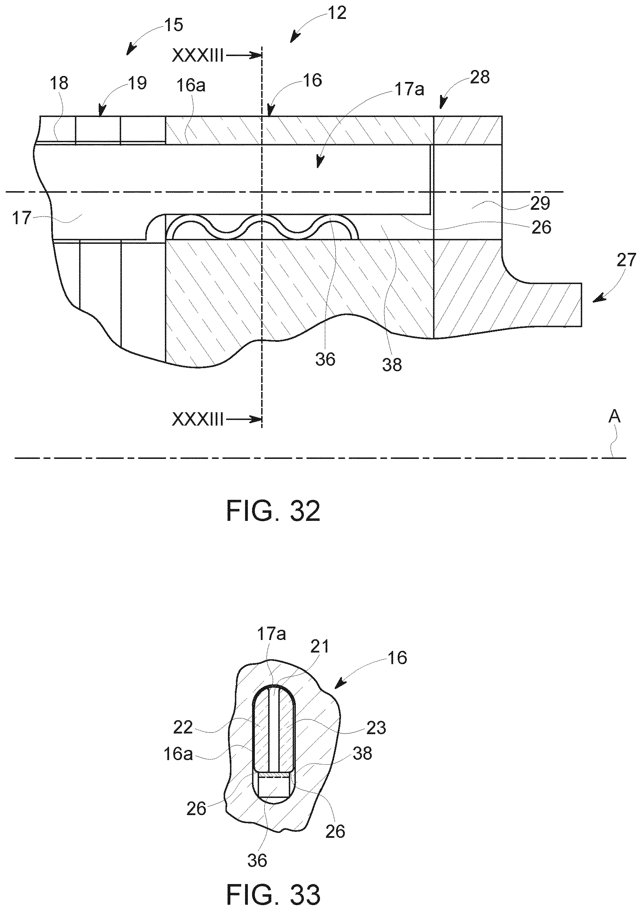

[Fig 33] illustrent des coupes partielles d'un sixième mode de réalisation du rotor ;

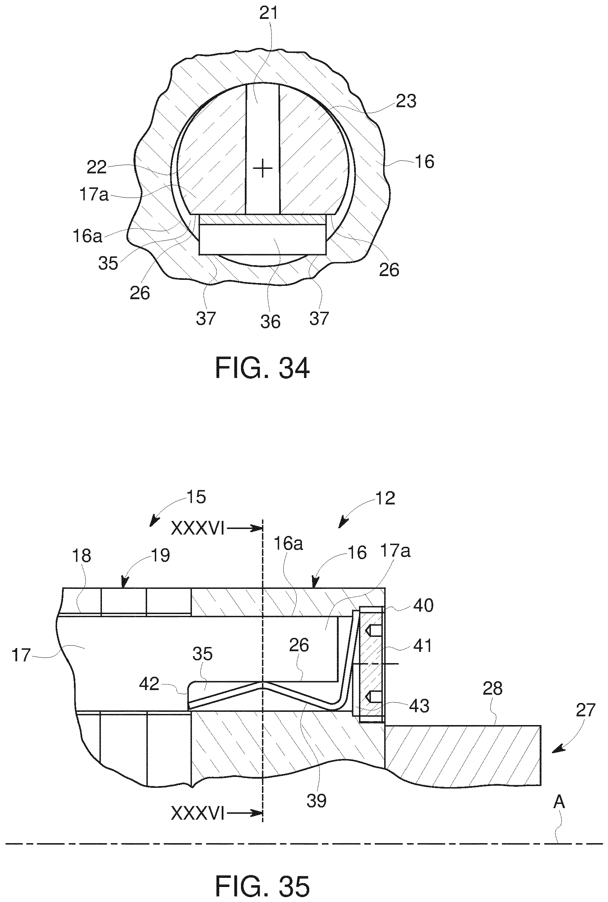

[Fig 34] illustre une coupe partielle d'un septième mode de réalisation du rotor ; et
[Fig 35]

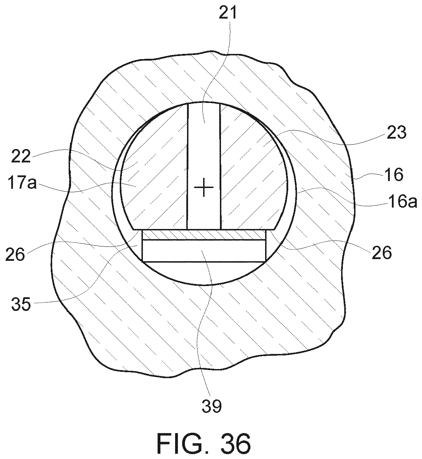

[Fig 36] illustrent des coupes partielles d'un huitième mode de réalisation du rotor.

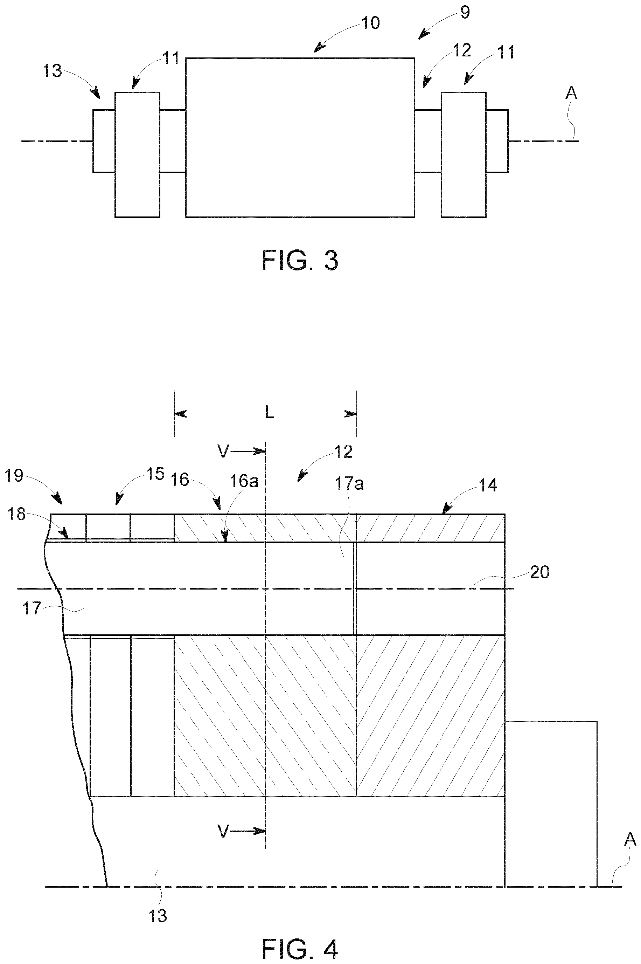

On se réfère à la Figure 3 qui illustre un mode de réalisation d'une machine électrique tournante asynchrone 9 à cage d'écureuil comprenant un stator 10, des paliers 11 et un rotor 12 inséré dans le stator 10 et les paliers 11.

Le rotor 12 comprend un arbre rotorique 13 réalisé par exemple en acier, d'axe A confondu avec l'axe de rotation du rotor 12.

On se réfère aux Figures 4 et 5 qui illustrent des coupes partielles d'un premier mode de réalisation du rotor 12 selon une direction axiale du rotor et selon la direction V-V.

Le rotor 12 comprend deux éléments de compaction comprenant des plateaux de serrage 14 enserrant une masse magnétique 15 cylindrique, des éléments conducteurs comportant des couronnes 16 de court-circuit intercalés entre la masse magnétique 15 et les plateaux de serrage 14 de compaction, et des barres 17 conductrices logées dans des logements 18 de la masse magnétique et réparties uniformément sur un diamètre de la masse magnétique.

Les logements 18 sont dimensionnés pour compenser la dilatation des barres conductrices 17 sous l'effet de la chaleur générée par le passage du courant lors de son fonctionnement et ainsi empêcher un balourd thermo-mécanique du rotor.

Une extrémité 17a de la barre conductrice 17 est logée dans un trou débouchant 16a de la couronne de court-circuit 16.

Les couronnes de court-circuit 16 et les barres conductrices 17 sont réalisées par exemple en cuivre et sont électriquement reliées entre elles pour former une cage d'écureuil lorsque le rotor est animé d'un mouvement de rotation.

L'extrémité 17a de la barre 17 est librement disposée dans le trou débouchant 16a de sorte qu'il subsiste un jeu de tolérance qui permet la libre dilatation thermique de la barre 17 dans le trou débouchant 16a, notamment selon une direction axiale.

Néanmoins ce jeu doit être suffisamment faible de manière à assurer un contact suffisant permettant le passage du courant électrique entre la barre 17 et la couronne de court-circuit 16.

La masse magnétique 15 comprend des plaques métalliques 19, l'épaisseur des plaques métalliques étant de préférence supérieure à 5% du diamètre extérieur de la masse magnétique 15.

En variante, la masse magnétique 15 peut comprendre des tôles magnétiques d'épaisseur inférieure à 2 mm, préférentiellement 0.65 mm ou 0.5 mm.

Selon encore une autre variante, la masse magnétique 15 peut comprendre un corps monobloc, par exemple en acier.

Selon encore une autre variante, l'élément conducteur comprend un disque de court-circuit.

Le plateau de serrage 14 comprend des trous d'insertion 20 disposés chacun en regard d'un logement 18.

Le trou débouchant 16a, la barre 17, le logement 18 et le trou d'insertion 20 ont une section sensiblement identique de sorte que la barre 17 puisse être insérée dans le logement 18 et établir un contact électrique avec la couronne de court-circuit 16.

En variante non représentée, le diamètre extérieur du plateau de serrage 14 est inférieur au diamètre d'implantation des barres 17 de sorte que les barres puissent être insérées dans les trous 16a et les logements 18.

La section du trou débouchant 16a, de la barre 17, du logement 18 et du trou d'insertion 20 est ronde.

On se réfère plus particulièrement à la Figure 5 qui illustre une section selon la direction V-V de l'extrémité 17a de la barre conductrice 17 logée dans le trou débouchant 16a.

L'extrémité 17a de la barre conductrice comprend une fente 21.

L'extrémité 17a est partiellement fendue de sorte que la section de l'extrémité 17a forme deux branches 22 et 23 symétriques par rapport à la fente 21.

Les deux branches 22 et 23 sont reliées par une partie 24 de l'extrémité 17a.

Lorsque le rotor 12 n'est pas en rotation, la surface de contact entre la barre 17 et le trou débouchant 16a de la couronne de court-circuit 16 est sensiblement linéaire.

L'extrémité 17a de la barre 17 est partiellement fendue sur une distance L en regard de l'élément conducteur 16.

La barre 17 est orientée dans le logement 18 de sorte que la fente 21 soit orientée vers l'axe de rotation A du rotor 12.

La partie 24 de l'extrémité 17a reliant les deux branches 22 et 23 est en regard de la périphérie extérieure du rotor 12.

Le centre de gravité G3, G4 de chaque branche 22, 23 est disposé de sorte que les branches 22, 23 s'écartent vers l'extérieur de la barre 17 sous l'effet de la force centrifuge lorsque le rotor 12 est animé d'un mouvement de rotation.

La section 25 représente la section de l'extrémité 17a la barre 17 déformée sous l'effet de la force centrifuge.

La surface périphérique de la barre 17 déformée sous l'effet de la force centrifuge vient en contact avec la surface du trou débouchant 16a et s'étend selon un angle α1 supérieur à 180°.

La surface de contact entre la surface périphérique de la barre 17 déformée et la surface du trou débouchant 16a selon l'angle α1 étant plus grande que celle obtenue avec une extrémité d'une barre connue de l'état de la technique, le courant électrique circulant dans les barres 17 est supérieur à celui circulant dans les barres connues de l'état de la technique. Par conséquent, la puissance électrique de la machine électrique tournante asynchrone 9 est augmentée.

Le profil de l'extrémité 17a de la barre 17 est déterminé par exemple par simulation numérique de sorte que le contact entre la barre 17 et le trou débouchant 16a soit la plus grande possible lorsque le rotor 12 atteint la vitesse nominale de fonctionnement de la machine électrique tournante.

La largeur de la fente 21 est par exemple égale à environ 5 à 30% du diamètre de la barre 17, de préférence à environ 10 à 20% du diamètre de la barre 17.

La profondeur radiale de la fente 21 est par exemple égale à environ 60 à 90% du diamètre de la barre 17, de préférence égale à environ 70 à 85% du diamètre de la barre 17.

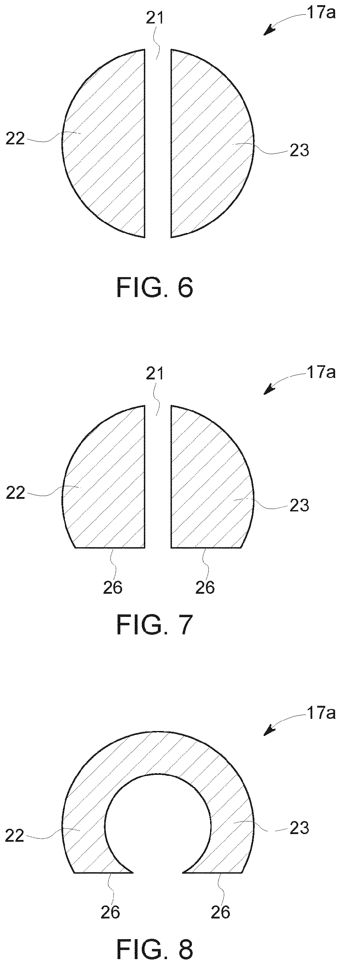

La Figure 6 illustre une section d'un deuxième mode de réalisation de l'extrémité 17a de la barre 17.

Ce mode de réalisation diffère du mode de réalisation illustré à la Figure 5 en ce que l'extrémité est fendue sur toute la section.

Les deux branches 22 et 23 ne sont plus reliées entre elles.

La Figure 7 illustre une section d'un troisième mode de réalisation de l'extrémité 17a de la barre 17.

Ce mode de réalisation diffère du mode de réalisation illustré à la Figure 6 en ce qu'un coté de l'extrémité libre de chaque branche 22 et 23 comprend un méplat 26.

La barre 17 est en outre orientée de sorte que le méplat 26 soit situé en regard de l'axe de rotation du rotor 12.

Dans les modes de réalisation de l'extrémité 17a fendue sur toute la section, le centre de gravité de chaque branche 22, 23 est disposé de sorte que les branches 22 et 23 s'écartent vers l'extérieur de la barre 17 sous l'effet de la force centrifuge lorsque le rotor 12 est animé d'un mouvement de rotation.

La surface périphérique de l'extrémité 17a fendue sur toute la section de la barre 17 déformée sous l'effet de la force centrifuge vient en contact sur toute la surface périphérique des branches 22 et 23 avec le trou débouchant 16a augmentant la surface de contact.

La Figure 8 illustre une section d'un quatrième mode de réalisation de l'extrémité 17a de la barre 17.

Ce mode de réalisation diffère du mode de réalisation illustré à la Figure 5 en ce que l'extrémité est creuse et comprend un méplat 26.

Dans les modes de réalisation de l'extrémité 17a de la barre 17, la section est ronde.

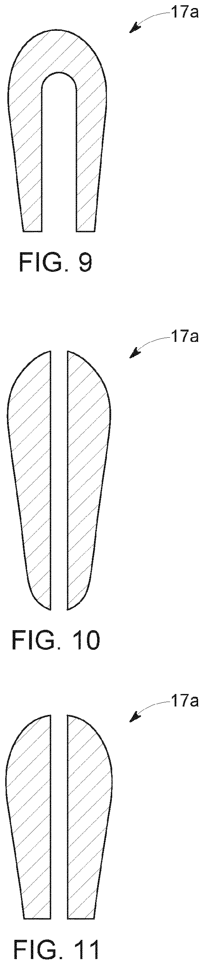

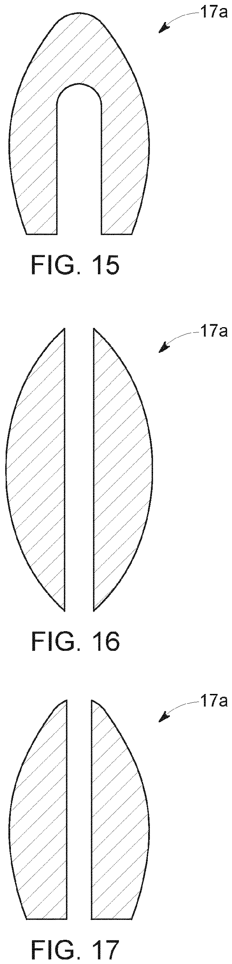

Bien entendu, les modes de réalisation de l'extrémité 17a de la barre 17 ne sont pas limitatifs, les sections pouvant avoir des formes diverses comportant des extrémités droites ou courbées reliées par des côtés droits ou courbés, les sections pouvant être partiellement ou totalement fendues et pouvant comprendre un méplat disposé sur un coté de l'extrémité libre de chaque branche comme illustrés aux Figures 9 à 20.

Les formes sont par exemple trapézoïdales, rectangulaires, oblongues.

Lorsque l'extrémité 17a de la barre 17 est fendue sur toute la section, l'extrémité 17a comprend deux sous-parties séparées par un plan perpendiculaire à la fente, la sous partie comprenant la dimension perpendiculaire à la fente la plus grande est en regard de la périphérie extérieure du rotor 12.

La largeur de la fente 21 est par exemple égale à environ 5 à 30% de la dimension perpendiculaire à la fente la plus grande, de préférence à environ 10 à 20% de la dimension perpendiculaire à la fente la plus grande.

Si la barre 17 est partiellement fendue, la profondeur radiale de la fente 21 est par exemple égale à environ 60 à 90% de la dimension radiale de la barre 17, de préférence égale à environ 70 à 85% de la dimension radiale de la barre 17.

La dimension radiale de la barre 17 comprenant un méplat est par exemple égale à environ 40 à 90% de la dimension radiale de la barre 17 ne comprenant pas de méplat, de préférence à environ 70 à 80% de la dimension radiale de la barre 17 ne comprenant pas de méplat.

Les Figures 21, 22 et 23 illustrent des coupes partielles d'un deuxième mode de réalisation du rotor 12 selon la direction axiale et selon les directions XXII-XXII et XXIII-XXIII.

L'arbre rotorique 13 du rotor 12 est non traversant et comprend deux demi-arbres 27 compactant la masse magnétique 15 comprenant les plaques métalliques 19, les demi-arbres étant reliés par des tirants non représenté.

L'élément de compaction comprend une bride de compaction 28 du demi-arbre 27.

Les disques de court-circuit 16 sont intercalés entre la masse magnétique 15 et les brides de compaction 28 de sorte que les disques de court-circuit 16 et les barres 17 forment une cage d'écureuil.

La bride de compaction comprend un trou d'insertion débouchant 29.

En variante non représentée, le diamètre extérieur de la bride de compaction 28 est inférieur au diamètre d'implantation des barres 17 de sorte que les barres puissent être insérées dans les trous 16a.

La barre 17 est logée dans le logement 18 et comprend l'extrémité 17a telle qu'illustrée à la Figure 5.

L'extrémité 17a de la barre 17 comprend un trou oblong 30 orienté selon une direction axiale et le disque de court-circuit 16 comprend un trou taraudé 31 débouchant.

Une goupille filetée 32 est insérée dans le trou taraudé 31 débouchant de sorte que la goupille 32 s'insère dans le trou oblong 30 pour empêcher la rotation de la barre conductrice 17 sur elle-même.

Le trou oblong 30 permet de compenser la dilatation de la barre conductrice 17 sous l'effet de la chaleur générée par le passage du courant lors de son fonctionnement tout en limitant le déplacement de la barre 17 selon une direction axiale pour maintenir le contact électrique entre la barre 17 et le disque de court-circuit 16.

Les Figures 24, 25 et 26 illustrent des coupes partielles d'un troisième mode de réalisation du rotor 12 selon la direction axiale et selon les directions XXV-XXV et XXVI-XXVI.

Ce mode de réalisation diffère du mode de réalisation illustré aux Figures 21 à 23 en ce que l'extrémité 17a de la barre 17 comprend un trou oblong 33 orienté et débouchant selon une direction axiale, la goupille 32 étant insérée dans le trou oblong 33 pour empêcher la rotation de la barre 17 sur elle-même.

Les Figures 27, 28 et 29 illustrent des coupes partielles d'un quatrième mode de réalisation du rotor 12 selon la direction axiale et selon les directions XXVIII-XXVIII et XXIX-XXIX.

Ce mode de réalisation diffère du mode de réalisation représenté aux Figures 24 à 26 en ce que la barre conductrice 17 s'étend partiellement dans le trou d'insertion débouchant 29 de la bride de compaction 28, la bride de compaction comprenant un trou taraudé 34 débouchant dans lequel est inséré la goupille 32.

Le diamètre des trous débouchant 29 est plus grand que le diamètre des trous débouchant 16a pour éviter un contact électrique parasite entre la barre 17 et la bride de compaction 28.

La réalisation du trou taraudé 34 débouchant est simplifiée par rapport à la réalisation du trou taraudé 31 débouchant du disque de court-circuit 16, l'acier étant plus résistant que le cuivre.

En outre, la section de l'extrémité 17a de la barre 17 est identique à la section représentée à la Figure 6.

Comme l'extrémité 17a de la barre 17 est fendue sur toute la section et sur une longueur L2 débouchant dans la masse magnétique 15 et dans le trou 29, la goupille 32 filetée est insérée dans le trou taraudé 34 débouchant de sorte que la goupille 32 s'insère dans la fente 21 de l'extrémité 17a de la barre 17 pour empêcher la rotation de la barre conductrice 17 sur elle-même.

En variante non représentée, un trou taraudé débouchant est réalisé dans l'élément conducteur 16, de préférence proche de la masse magnétique 15. Une goupille 32 est insérée dans le trou taraudé débouchant de sorte que la goupille 32 s'insère dans la fente 21 de l'extrémité 17a de la barre 17 fendue sur toute la section pour empêcher la rotation de la barre 17 sur elle-même. Le déplacement de la barre 17 selon une direction axiale est limité pour maintenir le contact électrique entre la barre et l'élément conducteur 16.

Lorsque la section de l'extrémité 17a de la barre 17 n'est pas symétrique par rapport à un plan médian perpendiculaire à la fente tel qu'illustré aux Figures 9 à 10, 12, 14, 15, 17, 18 et 20, l'extrémité 17a comprend deux sous-parties séparées par un plan perpendiculaire à la fente, la sous-partie comprenant la dimension perpendiculairement à la fente la plus grande étant en regard de la périphérie extérieure du rotor 12.

L'insertion de la goupille 32 dans la fente 21 pour empêcher la rotation de la barre 17 sur elle-même peut aussi s'appliquer à une extrémité 17a de la barre 17 ronde avec un méplat 26 tel qu'illustré à la Figure 7.

La limitation du déplacement axial de la barre 17 peut aussi se réaliser par l'insertion d'une goupille 32 à l'extrémité de la fente 21 proche de la masse magnétique 15 dans les barres des Figures 10, 11, 13, 14, 16, 17, 19 et 20 ou par l'insertion d'une goupille 32 dans un trou oblong 30 orienté selon une direction axiale réalisé dans l'extrémité 17a de la barre 17 creusée de la Figure 8 ou partiellement fendue des Figures 9, 12, 15 et 18.

Les Figures 30 et 31 illustrent des coupes partielles d'un cinquième mode de réalisation du rotor 12 selon la direction axiale et selon la direction XXXI-XXXI.

Ce mode de réalisation diffère du mode de réalisation représenté aux Figures 27 à 29 en ce que la barre conductrice 17 ne s'étend pas dans le trou d'insertion débouchant 29 de la bride de compaction 28, la bride de compaction 28 ne comprenant pas de trou taraudé 34 débouchant ni de goupille 32, l'extrémité 17a comprenant le méplat 26 et comprenant la fente 21 sur toute la section identique à la section représentée à la Figure 7.

La barre 17 est orientée de sorte que le méplat 26 soit situé en regard de l'axe de rotation du rotor. Le méplat 26 forme un logement 35 dans lequel est insérée une lame flexible 36 de manière à exercer une précontrainte radiale pour mettre en contact la périphérie externe de l'extrémité 17a de la barre 17 et le disque de court-circuit 16.

La lame flexible 36 est constituée par exemple par un ressort.

La lame flexible 36 comprend une lame flexible métallique ou une lame flexible isolante en matériau isolant électrique.

La lame flexible 36 peut être de forme quelconque, par exemple en forme de triangle. La dimension libre de la lame flexible est supérieure à celle du logement 35 de sorte que lorsqu'elle est insérée dans le logement 35, elle se déforme par compression pour exercer un effort radial de précontrainte sur la barre 17 vers la périphérie extérieure du rotor 12.

A des vitesses de rotation faibles, notamment pendant la phase de démarrage de la machine électrique tournante, lorsque la force centrifuge n'est pas suffisante pour déformer l'extrémité 17a de la barre 17, la lame flexible 36 améliore le contact électrique entre la barre 17 et le trou débouchant 16a du disque de court-circuit 16 en poussant selon une direction radiale l'extrémité 17a de la barre 17 contre le trou débouchant 16a du disque de court-circuit 16 évitant des étincelles provoquées par un mauvais contact.

Les Figures 32 et 33 illustrent des coupes partielles d'un sixième mode de réalisation du rotor 12 selon la direction axiale et selon la direction XXXIII-XXXIII.

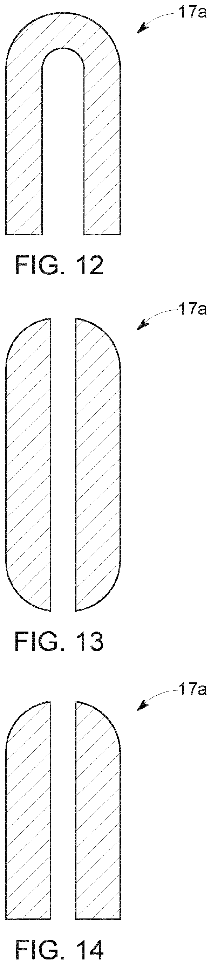

Ce mode de réalisation diffère du mode de réalisation représenté aux Figures 30 à 31 en ce que la section de la barre conductrice 17 est rectangulaire à bord arrondi comme illustré à la Figure 14, l'extrémité 17a de la barre conductrice 17 est fendue et comprend le méplat 26.

Le méplat 26 forme un logement 38 dans lequel est insérée la lame flexible 36 de manière à exercer une précontrainte radiale pour mettre en contact la périphérie externe de l'extrémité 17a de la barre 17 et le trou débouchant 16a du disque de court-circuit 16.

La lame flexible 36 est en forme de tôle ondulée.

Dans les modes de réalisation du rotor 12 décrit précédemment, les barres conductrices 17 sont réparties uniformément sur un diamètre de la masse magnétique 15.

Selon un autre mode de réalisation, les barres conductrices 17 peuvent être réparties uniformément sur plusieurs diamètres de la masse magnétique 15, au moins une extrémité de chaque barre conductrice 17 étant au moins partiellement fendue, au moins une extrémité de chaque barre conductrice 17 comprenant un méplat 26 et/ou comprenant l'élément flexible 36 de manière à exercer une précontrainte radiale pour mettre en contact la périphérie externe de l'extrémité 17a de la barre 17 et l'élément conducteur 16.

La Figure 34 illustre une coupe partielle d'un septième mode de réalisation du rotor 12 selon une direction radiale de l'extrémité 17a de la barre 17.

Ce mode de réalisation diffère de celui illustré aux Figures 30 et 31 en ce que le logement 35 du trou débouchant 16a comprend un deuxième méplat 37.

La lame flexible 36 est insérée dans le logement 35 en appui sur le premier méplat 26 de l'extrémité 17a de la barre 17 et en appui sur le deuxième méplat 37 du trou débouchant 16a.

La lame flexible 36 exerce une précontrainte radiale sur l'extrémité 17a de manière à mettre en contact la périphérie externe de l'extrémité avec le trou débouchant 16a de l'élément conducteur 16.

Les faces du méplat 37 empêchent la rotation de la lame flexible 36 bloquée en appui latéral sur les faces du méplat 37 dans le trou débouchant 16a, la lame flexible 36 empêchant la rotation de la barre 17 sur elle-même.

Les Figures 35 et 36 illustrent des coupes partielles d'un huitième mode de réalisation du rotor 12 selon la direction axiale et selon la direction XXXVI-XXXVI.

Ce mode de réalisation diffère de celui illustré aux Figures 30 et 31 en ce que la bride de compaction 28 comporte un diamètre extérieur inférieur au diamètre d'implantation des barres 17. Les barres conductrices ne s'étendent pas jusqu'à l'extrémité du trou débouchant 16a de l'élément conducteur 16 et une lame flexible 39 est insérée dans le logement 35.

La lame flexible 39 est constituée par exemple par un ressort. La lame flexible 39 comprend une lame flexible métallique ou une lame flexible isolante en matériau isolant électrique.

La lame flexible 39 diffère de la lame flexible 36 en ce qu'elle est prolongée au-delà de l'extrémité 17a de la barre 17.

L'extrémité opposée à la masse magnétique 15 du trou débouchant 16a comprend une gorge 43 et un trou taraudé 40 dans lequel est vissé un bouchon 41.

Le bouchon 41 est de préférence en cuivre pour éviter les dilatations thermiques différentielles avec l'élément conducteur 16 et un échauffement excessif d'un bouchon en acier par les pertes fer d'origine électromagnétique.

La lame flexible 39 comprend trois pans formés par exemple par pliage, les premier et deuxième pans insérés dans le logement 35 se déforment en compression exerçant une précontrainte radiale sur le méplat 26 de l'extrémité 17a pour mettre en contact la périphérie externe de l'extrémité 17a avec le trou découchant 16a de l'élément conducteur 16.

L'extrémité du premier pan est en appui sur une face d'appui 42 de l'extrémité 17a située à l'extrémité du méplat 26 opposée au bouchon 41, orientée radialement à l'extrémité 17a et sensiblement perpendiculaire au méplat 26.

Le troisième pan de la lame flexible 39 est logé dans un espace entre l'extrémité 17a de la barre 17 et le bouchon 41. L'extrémité du troisième pan est logée dans la gorge 43 à l'opposé du méplat 26.

Le bouchon 41 est vissé dans le trou taraudé 40 et pince l'extrémité du troisième pan logé dans la gorge 43 empêchant la rotation de la lame flexible 39 sur elle-même, la lame flexible 39 en appui sur le méplat 26 empêchant la rotation de la barre 17 sur elle-même.

L'extrémité du premier pan étant en appui sur la face d'appui 42 de l'extrémité 17a et l'extrémité du troisième pan étant pincée dans la gorge 43 par le bouchon 41, la lame flexible 39 limite le déplacement de la barre 17 selon une direction axiale pour maintenir le contact électrique entre la barre 17 et l'élément conducteur 16.

Le troisième pan logé entre l'extrémité 17a et le bouchon 41 est incliné, par exemple sensiblement perpendiculaire au deuxième pan de la lame flexible 39 de sorte que le troisième pan se déforme dans la direction axiale par l'opération de vissage du bouchon 41 dans le taraudage 40 qui exerce une précontrainte axiale sur la lame flexible 39.

L'appui de l'extrémité du premier pan sur la face d'appui 42 de l'extrémité 17a exerce une précontrainte axiale sur la barre 17 limitant les vibrations parasites de la barre 17 dans la direction axiale lorsque le rotor 12 est en rotation sans empêcher la libre dilatation thermique de la barre 17 dans la direction axiale puisque le troisième pan incliné est flexible.

La lame flexible 39 exerce une première fonction de précontrainte radiale de la barre 17 pour améliorer le contact électrique à basse vitesse de rotation du rotor 12, une deuxième fonction de précontrainte axiale de la barre 17 pour limiter le déplacement et les vibrations parasites dans la direction axiale de la barre 17 tout en permettant la libre dilatation thermique axiale de la barre 17 et une troisième fonction empêchant la rotation de la barre 17 sur elle-même.

L'extrémité 17a fendue sur toute la section de la barre 17 combinée avec la précontrainte radiale exercée par la lame flexible 39 augmentent la surface de contact entre l'extrémité 17a et le trou débouchant 16a de l'élément conducteur 16 permettant de réduire la longueur axiale de l'extrémité 17a assurant le passage du courant électrique par contact avec l'élément conducteur 16 pour une même épaisseur axiale de l'élément conducteur 16. La réduction de la longueur axiale de l'extrémité 17a crée un espace disponible dans le trou débouchant 16a pour loger le troisième pan de la lame flexible 39, la gorge 43 et le bouchon 41 vissé dans le taraudage 40.

En variante non représentée, la lame flexible a une forme ondulée insérée sous le méplat 26 dans le logement 35, un pan incliné de la lame flexible étant logé dans le trou d'insertion débouchant 29 de la bride de compaction 28, et l'extrémité du pan incliné étant logée dans une gorge et pincée par un bouchon vissé dans un taraudage du trou d'insertion débouchant 29 à l'extrémité opposée à la masse magnétique 15.

Selon encore une autre variante, un élément isolant électrique est placé entre le bouchon vissé et l'extrémité du pan incliné de la lame flexible logée dans une gorge d'un élément isolant électrique de forme tubulaire logé dans le trou d'insertion débouchant 29 et venant en appui contre l'élément conducteur 16.

La section de l'extrémité des barres conductrices et/ou l'insertion d'éléments flexibles pour exercer une précontrainte sur les barres conductrices permettent d'améliorer la surface de contact entre les barres et les éléments conducteurs de manière à augmenter le couple et la puissance développés par la machine électrique tournante à cage d'écureuil sans modifier les caractéristiques physiques de la machine, notamment le nombre de barres insérées dans le rotor.

## Revendications

1. Barre conductrice (17) pour rotor (12) à cage d'écureuil, comprenant au moins une extrémité (17a) partiellement fendue de sorte qu'une section de l'extrémité forme deux branches symétriques (22, 23) par rapport à la fente (21), le centre de gravité (G3, G4) de chaque branche est disposé de sorte que les branches s'écartent vers l'extérieur de la barre sous l'effet de la force centrifuge lorsque le rotor est animé d'un mouvement de rotation, **caractérisée en ce que** la barre est configurée pour que la surface périphérique de la barre déformée sous l'effet de la force centrifuge vient en contact avec la surface d'un trou débouchant d'un élément conducteur (16) du rotor, l'élément conducteur (16) du rotor étant un disque de court-circuit ou une couronne de court-circuit, et s'étend selon un angle supérieur à 180°.

2. Barre conductrice selon la revendication 1, dans laquelle l'extrémité (17a) de section ronde est creuse et comprend un méplat (26) disposé aux extrémités libres des branches.

3. Barre conductrice selon la revendication 1, dans laquelle la section comporte des extrémités (17a) droites ou courbées reliées par des côtés droits ou courbés, dans laquelle la section comprend de préférence en outre un méplat (26) disposé à une extrémité libre de chaque branche, et dans laquelle l'extrémité (17a) est de préférence fendue sur toute la section.

4. Rotor (12) à cage d'écureuil pour machine électrique tournante asynchrone à cage d'écureuil, comprenant deux éléments de compaction (14, 28) enserrant une masse magnétique (15) cylindrique, des disques de court-circuit ou couronnes de court-circuit, constituant des éléments conducteurs (16), intercalés entre la masse magnétique et les éléments de compaction, et des barres conductrices (17) selon l'une quelconque des revendications 1 à 3 disposées dans des logements (18) de la masse magnétique et réparties uniformément sur au moins un diamètre de la masse magnétique de sorte que les éléments conducteurs et les barres conductrices forment une cage d'écureuil, l'extrémité (17a) des barre étant partiellement fendue sur au moins une distance (L) en regard de l'élément conducteur, et chaque barre conductrice étant orientée dans un logement de sorte que la fente soit orientée vers un axe de rotation du rotor.

5. Rotor selon la revendication 4, dans lequel lorsque l'extrémité (17a) de la barre (17) est partiellement fendue, la partie (24) de l'extrémité reliant les deux branches (22, 23) est en regard de la périphérie extérieure du rotor.

6. Rotor selon la revendication 5, dans lequel l'extrémité (17a) comprend un trou oblong (30) orienté selon une direction axiale et l'élément conducteur (16) comprend un trou taraudé débouchant (31), une goupille filetée (32) étant insérée dans le trou taraudé débouchant de sorte que la goupille s'insère dans le trou oblong pour empêcher la rotation de la barre conductrice (17) sur elle-même.

7. Rotor selon la revendication 5, dans lequel l'extrémité (17a) comprend un trou oblong (33) orienté et débouchant selon une direction axiale, et l'élément conducteur (16) comprend un trou taraudé débouchant (31), une goupille filetée (32) étant insérée dans le trou taraudé débouchant de sorte que la goupille s'insère dans le trou oblong pour empêcher la rotation de la barre conductrice (17) sur elle-même.

8. Rotor selon la revendication 4, dans lequel lorsque l'extrémité (17a) de la barre (17) est fendue sur toute la section, l'extrémité comprend deux sous-parties (22, 23) séparées par un plan perpendiculaire à la fente (21), la sous-partie comprenant la dimension perpendiculairement à la fente la plus grande étant en regard de la périphérie extérieure du rotor, et dans lequel de préférence l'élément conducteur (16) ou l'élément de compaction (14, 28) comprend un trou taraudé (31, 34) débouchant, une goupille filetée (32) étant insérée dans le trou taraudé débouchant de sorte que la goupille s'insère dans la fente pour empêcher la rotation de la barre conductrice (17) sur elle-même.

9. Rotor selon l'une quelconque des revendications 4 à 8, dans lequel lorsque l'extrémité (17a) de la barre (17) comprend un méplat (26), la barre est en outre orientée de sorte que le méplat soit situé en regard d'un axe de rotation du rotor.

10. Rotor selon l'une quelconque des revendications 4 à 9, dans lequel l'extrémité (17a) de la barre conductrice comprenant un méplat (26) forme un logement (35, 38), une lame flexible (36) étant insérée dans ledit logement de manière à exercer une précontrainte radiale pour mettre en contact la périphérie externe de l'extrémité (17a) de la barre (17) et l'élément conducteur (16).

11. Rotor selon l'une quelconque des revendications 4 à 9, dans lequel l'extrémité (17a) de la barre conductrice comprenant un méplat (26) forme un logement (35), une lame flexible (39) étant insérée dans ledit logement et comprenant trois pans, un premier et un deuxième pans étant insérés dans le logement (35) de manière à exercer une précontrainte radiale pour mettre en contact la périphérie externe de l'extrémité (17a) de la barre (17) et l'élément conducteur (16), une extrémité du premier pan étant en appui sur une face d'appui (42) de l'extrémité (17a) située à l'extrémité du méplat (26) opposée à un bouchon (41) vissé dans un taraudage (40) situé à l'opposé de la masse magnétique (15) de l'élément conducteur (16) ou de l'élément de compaction (14,28), le troisième pan de la lame flexible (39) étant logé dans un espace entre l'extrémité (17a) de la barre (17) et le bouchon (41), une extrémité du troisième pan étant logée dans une gorge (43) du trou débouchant (16a, 29) située à l'opposée de la masse magnétique (15) et étant pincée par le bouchon vissé, le pan incliné flexible étant déformé dans une direction axiale par l'opération de vissage du bouchon de manière à exercer une précontrainte axiale sur la face d'appui de la barre conductrice (17) pour limiter le déplacement de la barre conductrice selon la direction axiale et de manière à empêcher la rotation de la barre sur elle-même.

12. Rotor selon l'une quelconque des revendications 10 et 11, dans lequel la lame flexible (36, 39) comprend une lame flexible métallique ou une lame flexible isolante.

13. Rotor selon l'une des revendications 4 à 12, dans lequel l'élément de compaction comprend un plateau de serrage (14) ou une bride de compaction (28) d'un demi-arbre non traversant (27).

14. Rotor selon l'une quelconque des revendications 4 à 13, dans lequel la masse magnétique (15) comprend des tôles magnétiques compactées, ou un empilement de plaques métalliques (19), ou un corps monobloc.

15. Machine électrique tournante asynchrone à cage d'écureuil comprenant un rotor selon l'une quelconque des revendications 4 à 14.

## Patentansprüche

1. Stromschiene (17) für Rotor (12) mit Kurzschlussläufer, umfassend mindestens ein Ende (17a), das derart teilweise gespalten ist, dass ein Abschnitt des Endes zwei in Bezug auf den Spalt (21) symmetrische Zweige (22, 23) bildet, wobei der Schwerpunkt (G3, G4) jedes Zweigs derart angeordnet ist, dass sich die Zweige unter der Wirkung der Zentrifugalkraft zur Außenseite der Schiene hin spreizen, wenn der Rotor durch eine Drehbewegung angetrieben wird, **dadurch gekennzeichnet, dass** die Schiene so konfiguriert ist, dass die Umfangsfläche der unter der Wirkung der Zentrifugalkraft verformten Schiene die Fläche einer herausführenden Bohrung eines leitfähigen Elements (16) des Rotors kontaktiert, wobei das leitfähige Element (16) des Rotors eine Kurzschlussscheibe oder eine Kurzschlusskrone ist und sich in einem Winkel von mehr als 180° erstreckt.

2. Stromschiene nach Anspruch 1, wobei das Ende (17A) mit rundem Querschnitt hohl ist und eine Flachstelle (26) umfasst, die an den freien Enden der Zweige angeordnet ist.

3. Stromschiene nach Anspruch 1, wobei der Abschnitt geradlinige oder gekrümmte Enden (17a) umfasst, die durch geradlinige oder gekrümmte Seiten verbunden sind, wobei der Abschnitt vorzugsweise weiter eine Flachstelle (26) umfasst, die an einem freien Ende jedes Zweigs angeordnet ist, und wobei das Ende (17a) vorzugsweise über den ganzen Abschnitt gespalten ist.

4. Rotor (12) für drehende elektrische Asynchronmaschine mit Kurzschlussläufer, umfassend zwei Kompaktionselemente (14, 28), die eine zylindrische Magnetmasse (15) umschließen, Kurzschlussscheiben oder Kurzschlusskronen, die leitfähige Elemente (16) bilden, die zwischen der Magnetmasse und den Kompaktionselementen eingeschoben sind, und Stromschienen (17) nach einem der Ansprüche 1 bis 3, die in Aufnahmen (18) der Magnetmasse angeordnet sind und über mindestens einen Durchmesser der Magnetmasse derart gleichmäßig verteilt sind, dass die leitfähigen Elemente und die Stromschienen einen Kurzschlussläufer bilden, wobei das Ende (17a) der Schiene über mindestens einen dem leitfähigen Element zugewandten Abstand (L) teilweise gespalten ist und wobei jede Stromschiene derart in einer Aufnahme ausgerichtet ist, dass der Spalt zu einer Drehachse des Rotors hin ausgerichtet ist.

5. Rotor nach Anspruch 4, wobei das Ende (17a) der Schiene (17) teilweise gespalten ist, wobei der Teil (24) des Endes, der die zwei Zweige (22, 23) verbindet, dem Außenumfang des Rotors zugewandt ist.

6. Rotor nach Anspruch 5, wobei das Ende (17a) eine längliche Bohrung (30) umfasst, die in einer axialen Richtung ausgerichtet ist, und das leitfähige Element (16) eine herausführende Gewindebohrung (31) umfasst, wobei ein geschraubter Stift (32) derart in der herausführenden Gewindebohrung eingefügt ist, dass der Stift sich in die längliche Bohrung einfügt, um die Drehung der Stromschiene (17) um sich selbst zu verhindern.

7. Rotor nach Anspruch 5, wobei das Ende (17a) eine längliche Bohrung (33) umfasst, die in einer axialen Richtung ausgerichtet und herausführend ist, und das leitfähige Element (16) eine herausführende Gewindebohrung (31) umfasst, wobei ein geschraubter Stift (32) derart in der herausführenden Gewindebohrung eingefügt ist, dass der Stift sich in die längliche Bohrung einfügt, um die Drehung der Stromschiene (17) um sich selbst zu verhindern.

8. Rotor nach Anspruch 4, wobei, wenn das Ende (17a) der Schiene (17) über den gesamten Abschnitt gespalten ist, das Ende zwei durch eine Ebene senkrecht zum Spalt (21) getrennte Teilabschnitte (22, 23) umfasst, wobei der Teilabschnitt, der die größere Abmessung senkrecht zum Spalt umfasst, dem Außenumfang des Rotors zugewandt ist, und wobei vorzugsweise das leitfähige Element (16) oder das Kompaktionselement (14, 28) eine herausführende Gewindebohrung (31, 34) umfasst, wobei ein geschraubter Stift (32) derart in der herausführenden Gewindebohrung eingefügt ist, dass sich der Stift in den Spalt einfügt, um die Drehung der Stromschiene (17) um sich selbst zu verhindern.

9. Rotor nach einem der Ansprüche 4 bis 8, wobei das Ende (17a) der Schiene (17) eine Flachstelle (26) umfasst, die Schiene weiter derart ausgerichtet ist, dass die Flachstelle sich einer Drehachse des Rotors zugewandt befindet.

10. Rotor nach einem der Ansprüche 4 bis 9, wobei das Ende (17a) der Stromschiene, das eine Flachstelle (26) umfasst, eine Aufnahme (35, 38) bildet, wobei eine flexible Klinge (36) derart in der Aufnahme eingefügt ist, dass sie eine radiale Vorspannung ausübt, um den Außenumfang des Endes (17a) der Schiene (17) und das leitfähige Element (16) in Kontakt zu setzen.

11. Rotor nach einem der Ansprüche 4 bis 9, wobei das Ende (17a) der Stromschiene, das eine Flachstelle (26) umfasst, eine Aufnahme (35, 38) bildet, wobei eine flexible Klinge (36) in der Aufnahme eingefügt ist und drei Seitenflächen umfasst, wobei eine erste und eine zweite Seitenfläche derart in der Aufnahme (35) eingefügt sind, dass sie eine radiale Vorspannung ausüben, um den Außenumfang des Endes (17a) der Schiene (17) und das leitfähige Element (16) in Kontakt zu setzen, wobei ein Ende der ersten Seitenfläche auf einer Auflagefläche (42) des Endes (17a) aufliegt, das sich am Ende der Flachstelle (26) gegenüber einem in ein Gewinde (40) festgeschraubten Verschluss (41) befindet, der sich der Magnetmasse (15) des leitfähigen Elements (16) oder dem Kompaktionselement (14, 28) gegenüberliegend befindet, wobei die dritte Seitenfläche der flexiblen Klinge (39) in einem Raum zwischen dem Ende (17a) der Schiene (17) und dem Verschluss (41) aufgenommen ist, wobei ein Ende der dritten Seitenfläche in einer Keilrille (43) der herausführenden Bohrung (16a, 29) aufgenommen ist, die sich der Magnetmasse (15) gegenüberliegend befindet, und durch den festgeschraubten Verschluss eingeklemmt wird, wobei die flexible geneigte Seitenfläche durch den Vorgang des Festschraubens des Verschlusses derart in eine axiale Richtung verformt wird, dass sie eine axiale Vorspannung auf die Auflagefläche der Stromschiene (17) ausübt, um die Verschiebung der Stromschiene in der axialen Richtung zu begrenzen, und derart, dass sie die Drehung der Schiene um sich selbst verhindert.

12. Rotor nach einem der Ansprüche 10 und 11, wobei die flexible Klinge (36, 39) eine metallische flexible Klinge oder eine isolierende flexible Klinge umfasst.

13. Rotor nach einem der Ansprüche 4 bis 12, wobei das Kompaktionselement eine Pressplatte (14) oder einen Kompaktionsflansch (28) einer nichtdurchgehenden Halbachse (27) umfasst.

14. Rotor nach einem der Ansprüche 4 bis 13, wobei die Magnetmasse (15) kompaktierte Magnetbleche oder einen Stapel von Metallplatten (19) oder einen einstückigen Körper umfasst.

15. Drehende elektrische Asynchronmaschine mit Kurzschlussläufer, umfassend einen Rotor nach einem der Ansprüche 4 bis 14.

## Claims

1. Conductor bar (17) for a squirrel-cage rotor (12) comprising at least one end (17a) which is partially slit such that a section of the end forms two symmetrical branches (22, 23) relative to the slit (21), the centre of gravity (G3, G4) of each branch is arranged such that the branches flare towards the outside of the bar under the effect of centrifugal force when the rotor is rotated, **characterised in that** the bar is configured such that the peripheral surface of the bar deformed under the effect of the centrifugal force comes into contact with the surface of a hole leading to a conductive element (16) of the rotor, the conductive element (16) of the rotor being a short-circuit disk or a short-circuit crown, and extends along an angle greater than 180°.

2. Conductor bar according to claim 1, wherein the round-section end (17a) is hollow and comprises a flat part (26) disposed at the free ends of the branches.

3. Conductor bar according to claim 1, wherein the section comprises straight or curved ends (17a) connected by straight or curved sides, wherein the section preferably further comprises a flat part (26) disposed at a free end of each branch, and wherein the end (17a) is preferably slit over the whole section.

4. Squirrel-cage rotor (12) for a rotating electric machine asynchronous with squirrel-cage, comprising two compacting elements (14, 28) surrounding a cylindrical magnetic mass (15), short-circuit disks or short-circuit crowns, constituting conductive elements (16), interleaved between the magnetic mass and the compacting elements, and conductor bars (17) according to any one of claims 1 to 3 disposed in housings (18) of the magnetic mass and distributed uniformly over at least one diameter of the magnetic mass such that the conductive elements and the conductor bars form a squirrel-cage, the end (17a) of the bars being partially slit over at least one distance (L) facing the conductive element, and each conductor bar being oriented in a housing such that the slit is oriented towards an axis of rotation of the rotor.

5. Rotor according to claim 4, wherein when the end (17a) of the bar (17) is partially slit, the part (24) of the end connecting the two branches (22, 23) is facing the outer periphery of the rotor.

6. Rotor according to claim 5, wherein the end (17a) comprises an oblong hole (30) oriented along an axial direction and the conductive element (16) comprises a tapped through hole (31), a threaded pin (32) being inserted into the tapped through hole such that the pin is inserted into the oblong hole to prevent the rotation of the conductor bar (17) on itself.

7. Rotor according to claim 5, wherein the end (17a) comprises an oblong hole (33) oriented and leading along an axial direction, and the conductive element (16) comprises a tapped through hole (31), a threaded pin (32) being inserted into the tapped through hole such that the pin is inserted into the oblong hole to prevent the rotation of the conductor bar (17) on itself.

8. Rotor according to claim 4, wherein when the end (17a) of the bar (17) is slit over the whole section, the end comprises two subparts (22, 23) separated by a plane perpendicular to the slit (21), the subpart comprising the dimension perpendicularly to the largest slit being facing the outer periphery of the rotor, and wherein preferably the conductive element (16) or the compacting element (14, 28) comprises a tapped through hole (31, 34), a threaded pin (32) being inserted into the tapped through hole such that the pin is inserted into the slit to prevent the rotation of the conductor bar (17) on itself.

9. Rotor according to any one of claims 4 to 8, wherein when the end (17a) of the bar (17) comprises a flat part (26), the bar is further oriented such that the flat part is located facing an axis of rotation of the rotor.

10. Rotor according to any one of claims 4 to 9, wherein the end (17a) of the conductor bar comprising a flat part (26) forms a housing (35, 38), a flexible strip (36) being inserted into said housing so as to exert a radial pre-stress to put the outer periphery of the end (17a) of the bar (17) and the conductive element (16) in contact.

11. Rotor according to any one of claims 4 to 9, wherein the end (17a) of the conductor bar comprising a flat part (26) forms a housing (35), a flexible strip (39) being inserted into said housing and comprising three panels, a first and a second panel being inserted into the housing (35) so as to exert a radial pre-stress to put the outer periphery of the end (17a) of the bar (17) and the conductive element (16) in contact, an end of the first panel being born on a bearing face (42) of the end (17a) located at the end of the flat part (26) opposite a stopper (41) screwed into a threading (40) located opposite the magnetic mass (15) of the conductive element (16) or of the compacting element (14, 28), the third panel of the flexible strip (39) being housed in a space between the end (17a) of the bar (17) and the stopper (41), an end of the third panel being housed in a recess (43) of the through hole (16a, 29) and being clamped by the screwed stopper, the flexible inclined panel being deformed in an axial direction by the screwing operation of the stopper so as to exert an axial pre-stress on the bearing face of the conductor bar (17) to limit the movement of the conductor bar in the axial direction and so as to prevent the rotation of the bar on itself.

12. Rotor according to any one of claims 10 and 11, wherein the flexible strip (36, 39) comprises a metal flexible strip or an insulating flexible strip.

13. Rotor according to one of claims 4 to 12, wherein the compacting element comprises a clamping plate (14) or a compacting flange (28) of an end stub shaft (27).

14. Rotor according to any one of claims 4 to 13, wherein the magnetic mass (15) comprises compacted magnetic sheets, or a stack of metal plates (19), or a one-piece body.

15. Rotating electric machine asynchronous with squirrel-cage comprising a rotor according to any one of claims 4 to 14.
